# EUROPÄISCHE PATENTSCHRIFT

(11) **EP 1 239 169 B1**
(45) Veröffentlichungstag und Bekanntmachung des Hinweises auf die Patenterteilung: **12.01.2005**
(21) Anmeldenummer: 02002824.7
(22) Anmeldetag: 08.02.2002
(51) Int. Cl.: F16C 13/00

(54) **Walze mit einem nicht homogenen Mantel**
Roller with a shell having a non-uniform density
Cylindre muni d'une enveloppe à densité non homogène

(30) Priorität: 09.03.2001 DE 10112202
(43) Veröffentlichungstag der Anmeldung: 11.09.2002
(73) Patentinhaber: Voith Paper Patent GmbH, 89522 Heidenheim (DE)
(72) Erfinder: Grabscheid, Joachim, Dr., 89547 Gerstetten (DE); Wulz, Klaus, 3100 St. Pölten (AT)

(56) Entgegenhaltungen:
- DE-A- 2 734 268
- DE-U- 29 613 795
- US-A- 4 449 278

## Beschreibung

Die Erfindung betrifft eine Walze, bestehend aus einem ausschließlich in einem axial mittleren Bereich auf einem durchgehenden Walzenträger zumindest in radialer Richtung abgestützten Walzenrohr, welches außerhalb dieses mittleren Bereichs einen eine Biegung des Walzenrohrs relativ zum Walzenträger erlaubenden Abstand zum Walzenträger aufweist.

Derartige mittig gestützte Walzen (Center Supported Roll, CSR) finden insbesondere als Leitwalzen für Siebe, Filze, Tücher, Faserstoffbahnen, Folien oder ähnliches Anwendung.

Aus der DE 296 13 795-U is schließkich eine Walze gemäß dem Oberbegriff des Anspruchs 1 bekannt.

Eine im Former einer Herstellungsmaschine für eine Faserstoffbahn, insbesondere Papier- oder Kartonbahn, angeordnete und mittig gestützte Walze dient dazu, den Sieblauf im Former zu verbessern. Durch das gegenüber im Regelfall über seitliche Zapfen abgestützten Walzenrohren genau umgekehrte Biegeverhalten kann der negative Einfluss anderer Walzen auf den Sieblauf mit einer mittig gestützten Walze zumindest teilweise kompensiert werden. So kann zum Beispiel die unterschiedliche Länge der Siebschlaufe an den Rändern und in der Mitte teilweise ausgeglichen werden.
Darüber hinaus führt die Eigengewichtskomponente des Walzenrohrs, wie bei jeder normalen seitlich gestützten Walze, zu einem je nach Umschlingungsrichtung positiven oder negativen Breitstreckeffekt, jedoch mit dem Unterschied, dass eine mittig gestützte Walze an den Einbaupositionen, an denen eine normale Walze einen negativen, einen positiven Breitstreckeffekt aufweist. Bevorzugte Einbaupositionen einer mittig gestützten Walze sind demnach dort gegeben, wo eine große Umschlingung und/oder eine normale Walze eine großen negativen Breitstreckeffekt hat.

Als nachteilhaft bei einer derartig mittig gestützten Walze hat sich ergeben, dass sie nur eine geringe Durchbiegung unter Eigengewicht, insbesondere bei Verwendung eines faserverstärkten Kunststoffs für das Walzenrohr, aufweist. Das heißt in anderen Worten, sie bewirkt nur einen geringen Breitstreckeffekt.

Es ist also Aufgabe der Erfindung, eine Walze der vorgenannten Art zu schaffen, die einen erhöhten positiven Breitstreckeffekt infolge höherer Durchbiegung aufweist, um dadurch möglichst viel des negativen Breitstreckeffekts anderer in der Siebschlaufe angeordneter Walzen, beispielsweise Saugwalzen, zu kompensieren.

Diese Aufgabe wird bei einer Walze der eingangs genannten Art erfindungsgemäß dadurch gelöst, dass das Walzenrohr an seinen beiden seitlichen Endbereichen mit je einem erhöhten Gewicht versehen ist, um dadurch aufgrund des jeweils wirkenden Zusatzgewichts eine deutliche Durchbiegungskomponente im jeweiligen seitlichen Endbereich zu erzeugen. Die aus den beiden Durchbiegungskomponenten resultierenden Durchbiegungen in den beiden seitlichen Endbereichen erzeugen letztendlich den gewünschten erhöhten positiven Breitstreckeffekt der Walze.

In erster erfindungsgemäßer Ausgestaltung ist das erhöhte Gewicht zumindest ein einteiliges Zusatzgewicht. Durch die Ausbildung als Zusatzgewicht ist die Möglichkeit der Anpassung des erhöhten Gewichts an verschiedene Betriebszustände durch Austausch des Zusatzgewichts gegeben.

In erster bevorzugter Weise weist das Zusatzgewicht die Form eines kreisrunden Rings mit einem im wesentlichen konstanten Außendurchmesser auf und ist zumindest teilweise innerhalb des seitlichen Endbereichs des Walzenrohrs angebracht, in zweiter bevorzugter Weise weist das Zusatzgewicht die Form eines kreisrunden Rings mit mindestens zwei Außendurchmessern auf und ist sowohl innerhalb als auch außerhalb des seitlichen Endbereichs des Walzenrohrs angebracht, wobei der größte Außendurchmesser des Zusatzgewichts nicht größer als der Außendurchmesser des Walzenrohrs ist.

In weiterer Ausgestaltung weist das als kreisrunder Ring ausgebildete Zusatzgewicht mindestens zwei symmetrisch zur Ringachse angeordnete Aussparungen auf. Diese Aussparungen können das Zusatzgewicht sowohl unter dynamischen Gesichtspunkten optimieren als auch das Betriebsgewicht des Zusatzgewichts günstig reduzieren.

Um einen optimalen Betrieb der Walze erreichen und gewährleisten zu können, ist das Zusatzgewicht in seiner Lage vorzugsweise durch eine Klemmeinrichtung einstellbar.

In zweiter erfindungsgemäßer Ausgestaltung ist das erhöhte Gewicht durch mindestens eine Materialanhäufung bei vergrößerter Wandstärke des Walzenrohrs hergestellt. In bevorzugter Weise erfolgt die Materialanhäufung während des Herstellungsprozesses.

Und in dritter erfindungsgemäßer Ausgestaltung ist das erhöhte Gewicht durch die Verwendung mindestens eines Werkstoffs mit größerer Dichte als die Dichte des Walzenrohrs hergestellt. Hierdurch wird das erhöhte Gewicht ohne wesentlichen Volumenzuwachs bei gegebener Kontur erreicht. Von Vorteil ist, wenn der Werkstoff mit größerer Dichte vorzugsweise vollständig von dem Material des Walzenrohrs umgeben ist.

Um den bereits erwähnten Breitstreckeffekt der Walze zu erhalten, liegt das Zusatzgewicht im Bereich von 0,5 bis 1,5, vorzugsweise von 0,8 bis 1,2, des Gewichts des Walzenrohrs.

Gemäß einer bevorzugten Ausführungsform der Erfindung ist das Walzenrohr aus einem Material hergestellt, das eine geringere, insbesondere eine wesentlich geringere, Biegesteifigkeit als das für den Walzenträger verwendete Material aufweist. Durch diese vergleichsweise biegeweiche Ausführung des Walzenrohrs und die vergleichsweise biegesteife Ausbildung des Walzenträgers wird jeweils erreicht, dass durch die Relativbewegung zwischen den beiden seitlichen Endbereichen der Walze und dem Walzenträger große Verformungen des Walzenrohrs erzielt werden.

Ein bevorzugtes Material für das Walzenrohr besteht aus einem faserverstärkten Kunststoff, beispielsweise glasfaserverstärkter Kunststoff (GfK) oder kohlefaserverstärkter Kunststoff (CfK). Besonders bevorzugt ist es dabei, wenn das Walzenrohr bei der Herstellung mit einem Wickelaufbau versehen wird.

Hinsichtlich einer ersten Walzenkonstruktion ist das Walzenrohr im axial mittleren Bereich mechanisch fest mit dem Walzenträger verbunden und der Walzenträger ist rotierbar in einer Walzenstuhlung gelagert. Die Lagerungen des Walzenträgers in der Walzenstuhlung umfassen bevorzugterweise jeweils zumindest ein CARB-Lager.
Hinsichtlich einer zweiten Walzenkonstruktion ist das Walzenrohr im axial mittleren Bereich rotierbar auf dem Walzenträger gelagert, wobei die mittige Lagerung zumindest ein Pendelrollenlager umfasst.

Es versteht sich, dass die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den Unteransprüchen und der nachfolgenden Beschreibung bevorzugter Ausführungsbeispiele unter Bezugnahme auf die Zeichnung.

Es zeigen
- Figur 1 bis 2:: verschiedene schematisierte und nicht maßstabsgetreue Längsschnitte durch erfindungsgemäße Walzen;
- Figur 3:: ein erfindungsgemäßes Zusatzgewicht in Vorderansicht; und
- Figuren 4 und 5:: weitere schematisierte und nicht maßstabsgetreue Längsteilschnitts durch erfindungsgemäße Walzen.

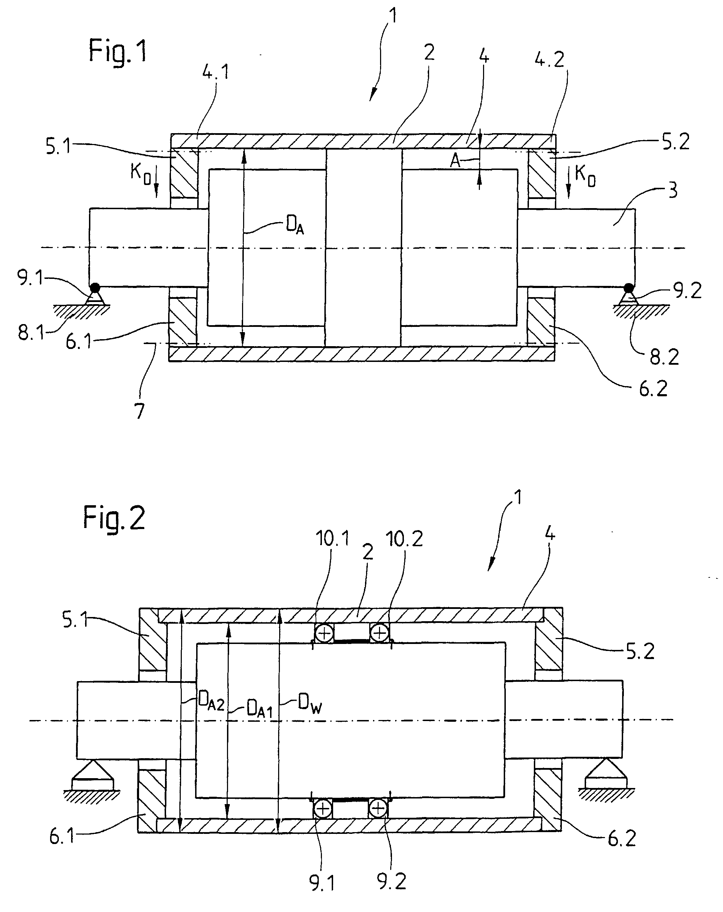

Die Figur 1 zeigt eine erste erfindungsgemäße Walze 1 in einem schematisierten und nicht maßstabsgetreuen Längsschnitt.
Die Walze 1 besteht aus einem ausschließlich in einem axial mittleren Bereich 2 auf einem durchgehenden Walzenträger 3 zumindest in radialer Richtung abgestützten Walzenrohr 4, welches außerhalb dieses mittleren Bereichs 2 einen eine Biegung des Walzenrohrs 4 relativ zum Walzenträger 3 erlaubenden Abstand A zum Walzenträger 3 aufweist.
Erfindungsgemäß ist nun vorgesehen, dass das Walzenrohr 4 an seinen beiden seitlichen Endbereichen 4.1, 4.2 mit je einem erhöhten Gewicht in Form zumindest eines einteiligen Zusatzgewichts 5.1, 5.2 versehen ist, um dadurch aufgrund des jeweils wirkenden Zusatzgewichts 5.1, 5.2 eine deutliche Durchbiegungskomponente K_{D} (Pfeil) unter Eigengewicht im jeweiligen seitlichen Endbereich 4.1, 4.2 zu erzeugen. Es ist selbstverständlich, dass das jeweilige Zusatzgewicht 5.1, 5.2 auch aus mehreren Bauteilen, insbesondere auch mit verschiedenen jeweiligen Gewichten und Dimensionen, bestehen kann.
Das Zusatzgewicht 5.1, 5.2 liegt erfindungsgemäß im Bereich von 0,5 bis 1,5, vorzugsweise von 0,8 bis 1,2, des Gewichts des Walzenrohrs 4.
In Figur 1 weist das jeweilige Zusatzgewicht 5.1, 5.2 die Form eines kreisrunden Rings 6.1, 6.2 mit einem im wesentlichen konstanten Außendurchmesser D_{A} auf und es zumindest teilweise, in Figur 1 sogar vollständig innerhalb des seitlichen Endbereichs 4.1, 4.2 des Walzenrohrs 4 angebracht.
Weiterhin ist das jeweilige Zusatzgewicht 5.1, 5.2 in seiner Lage einstellbar, vorzugsweise durch eine gemäß dem Stand der Technik bekannte Klemmeinrichtung, beispielsweise in Form von Klemmringen und dergleichen. Eine derartige Klemmeinrichtung 7 ist lediglich durch eine Strichpunktlinie angedeutet.
Das Walzenrohr 4 ist aus einem Material hergestellt, das eine geringere, insbesondere eine wesentlich geringere, Biegesteifigkeit als das für den Walzenträger 3 verwendete Material aufweist.
Beispielsweise besteht das Walzenrohr 4 aus einem faserverstärkten Kunststoff besteht, wobei das Walzenrohr 4 bevorzugt einen Wickelaufbau aufweist.
Das Walzenrohr 4 in Figur 1 ist im axial mittleren Bereich 2 mechanisch fest mit dem Walzenträger 3 verbunden und der Walzenträger 3 ist endseitig rotierbar in einer Walzenstuhlung 8.1, 8.2 gelagert. Die Lagerungen 9.1, 9.2 des Walzenträgers 3 in der Walzenstuhlung 8.1, 8.2 umfassen vorzugsweise jeweils zumindest ein CARB-Lager.

Die Figur 2 zeigt eine zweite erfindungsgemäße Walze 1 in einem schematisierten und nicht maßstabsgetreuen Längsschnitt.
Da die dargestellte Walze 1 im Grundaufbau prinzipiell der Walze der Figur 1 ähnelt, wird auf diese verwiesen.
Erfindungsgemäß ist nun vorgesehen, dass das Zusatzgewicht 5.1, 5.2 die Form eines kreisrunden Rings 6.1, 6.2 mit mindestens zwei Außendurchmessern D_{A1}, D_{A2} aufweist und sowohl innerhalb als auch außerhalb des seitlichen Endbereichs 4.1, 4.2 des Walzenrohrs 4 angebracht ist, wobei der größte Außendurchmesser D_{A2} des Zusatzgewichts 5.1, 5.2 nicht größer als der Außendurchmesser D_{w} des Walzenrohrs 4 ist. Der Vollständigkeit halber wird jedoch noch angemerkt, dass die Außenkontur des Rings nicht nur auf eine kreisrunde Kontur mit mindestens einem Durchmesser beschränkt ist; sie kann vielmehr auch konisch (keilförmig), parabolisch, polygonartig und dergleichen ausgeführt sein.

Weiterhin ist das Walzenrohr 4 im axial mittleren Bereich 2 rotierbar auf dem Walzenträger 3 gelagert, wobei die mittige Lagerung 9.1, 9.2 bevorzugterweise zumindest ein in vereinfachter Darstellung dargestelltes Pendelrollenlager 10.1, 10.2 umfasst.

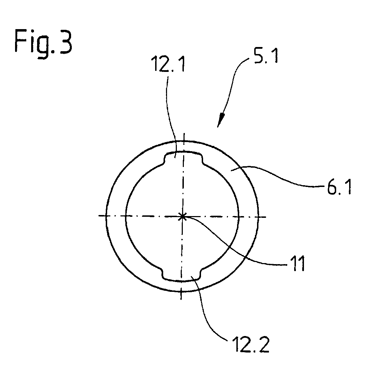

Die Figur 3 zeigt ein erfindungsgemäßes Zusatzgewicht 5.1 in Vorderansicht.
Das als kreisrunder Ring 6.1 ausgebildete Zusatzgewicht 5.1 weist mindestens zwei symmetrisch zur Ringachse 11 angeordnete Aussparungen 12.1, 12.2 auf. Die prinzipielle Form der Aussparungen ist selbstverständlich nicht auf Form der Aussparungen 12.1, 12.2 beschränkt; sie kann vielmehr jede fertigungstechnisch und/oder dynamisch optimale Form mit Runden, Sprüngen, Stufen, Kurven und dergleichen aufweisen.

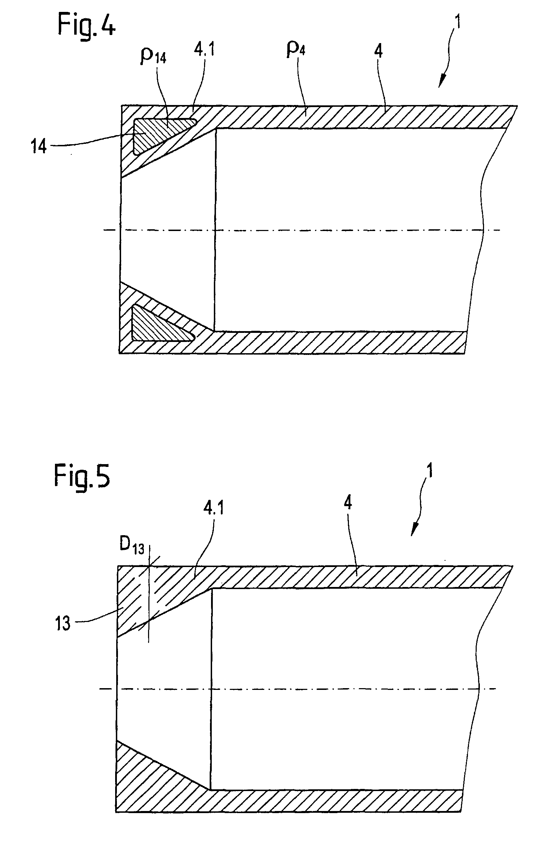

Die Figuren 4 und 5 zeigen weitere schematisierte und nicht maßstabsgetreue Längsteilschnitte durch erfindungsgemäße Walzen 1, jedoch ohne Walzenträger. Da die dargestellte Walzen 1 im Grundaufbau jedoch prinzipiell der Walze der Figur 1 ähneln, wird auf diese verwiesen.
Erfindungsgemäß ist in Figur 4 nun vorgesehen, dass das Walzenrohr 4 an seinen beiden seitlichen Endbereichen 4.1 (, 4.2) mit je einem erhöhten Gewicht durch die Verwendung mindestens eines Werkstoffs 14 mit größerer Dichte ρ₁₄ als die Dichte ρ₄ des Walzenrohrs 4 versehen ist. Dabei ist der Werkstoff 14 mit größerer Dichte ρ₁₄, der im Grunde jede beliebige rotationssymmetrische Form annehmen kann, vorzugsweise vollständig von dem Material des Walzenrohrs 4 umgeben.
Weiterhin ist in Figur 5 nun vorgesehen, dass das Walzenrohr 4 an seinen beiden seitlichen Endbereichen 4.1 (, 4.2) mit je einem erhöhten Gewicht durch mindestens eine Materialanhäufung 13 bei vergrößerter Wandstärke D₁₃ des Walzenrohrs 4 versehen ist. Die Materialanhäufung 13, die wiederum jede beliebige rotationssymmetrische Form annehmen kann, erfolgt vorzugsweise während des Herstellungsprozesses.
Der Werkstoff 14 mit größerer Dichte ρ₁₄, und/oder die Materialanhäufung 13 kann in weiterer Ausgestaltung in Umfangsrichtung des Walzenrohrs 4 auch verteilt, das heißt in Sektionen angebracht sein. Wichtig ist dabei lediglich seine rotationssymmetrische Anordnung, um dadurch ein eventuelles Maß an Unwucht bestmöglich zu vermeiden.

Zusammenfassend ist festzuhalten, dass durch die Erfindung eine Walze der eingangs genannten Art geschaffen wird, die einen erhöhten positiven Breitstreckeffekt infolge höherer Durchbiegung unter Eigengewicht aufweist, um dadurch möglichst viel des negativen Breitstreckeffekts anderer in der Siebschlaufe angeordneter Walzen, beispielsweise Saugwalzen, zu kompensieren.

### Bezugszeichenliste

- 1: Walze
- 2: Axial mittlerer Bereich
- 3: Walzenträger
- 4: Walzenrohr
- 4.1, 4.2: Seitlicher Endbereich
- 5.1, 5.2: Zusatzgewicht (erhöhtes Gewicht)
- 6.1, 6.2: Ring
- 7: Klemmeinrichtung
- 8.1, 8.2: Walzenstuhlung
- 9.1, 9.2: Lagerung
- 10.1, 10.2: Pendelrollenlager
- 11: Ringachse
- 12.1, 12.2: Aussparung
- 13: Materialanhäufung (erhöhtes Gewicht)
- 14: Werkstoff (erhöhtes Gewicht)

- A: Abstand
- D_{A}, D_{A1}, D_{A2}, D_{W}: Außendurchmesser
- D₁₃: Wandstärke
- K_{D}: Durchbiegungskomponente (Pfeil)
- ρ₁₄: Dichte (Werkstoff)
- ρ₄: Dichte (Walzenrohr)

## Patentansprüche

1. Walze (1), bestehend aus einem ausschließlich in einem axial mittleren Bereich (2) auf einem durchgehenden Walzenträger (3) zumindest in radialer Richtung abgestützten Walzenrohr (4), welches außerhalb dieses mittleren Bereichs (2) einen eine Biegung des Walzenrohrs (4) relativ zum Walzenträger (3) erlaubenden Abstand (A) zum Walzenträger (3) aufweist,
**dadurch gekennzeichnet,**
**dass** das Walzenrohr (4) an seinen beiden seitlichen Endbereichen (4.1, 4.2) mit je einem erhöhten Gewicht (5.1, 5.2, 13, 14) versehen ist, um dadurch aufgrund des jeweils wirkenden erhöhten Gewichts (5.1, 5.2, 13, 14) eine deutliche Durchbiegungskomponente (K_{D}) unter Eigengewicht im jeweiligen seitlichen Endbereich (4.1, 4.2) zu erzeugen.

2. Walze (1) nach Anspruch 1,
**dadurch gekennzeichnet,**
**dass** das erhöhte Gewicht (5.1, 5.2, 13, 14) zumindest ein einteiliges Zusatzgewicht (5.1, 5.2) ist.

3. Walze (1) nach Anspruch 2,
**dadurch gekennzeichnet,**
**dass** das Zusatzgewicht (5.1, 5.2) die Form eines kreisrunden Rings (6.1, 6.2) mit einem im wesentlichen konstanten Außendurchmesser (D_{A}) aufweist und zumindest teilweise innerhalb des seitlichen Endbereichs (4.1, 4.2) des Walzenrohrs (4) angebracht ist.

4. Walze (1) nach Anspruch 2,
**dadurch gekennzeichnet,**
**dass** das Zusatzgewicht (5.1, 5.2) die Form eines kreisrunden Rings (6.1, 6.2) mit mindestens zwei Außendurchmessern (D_{A1}, D_{A2}) aufweist und sowohl innerhalb als auch außerhalb des seitlichen Endbereichs (4.1, 4.2) des Walzenrohrs (4) angebracht ist, wobei der größte Außendurchmesser (D_{A2}) des Zusatzgewichts (5.1, 5.2) nicht größer als der Außendurchmesser (D_{W}) des Walzenrohrs (4) ist.

5. Walze (1) nach Anspruch 3 oder 4,
**dadurch gekennzeichnet,**
**dass** das als kreisrunder Ring (6.1, 6.2) ausgebildete Zusatzgewicht (5.1, 5.2) mindestens zwei symmetrisch zur Ringachse (11) angeordnete Aussparungen (12.1, 12.2) aufweist.

6. Walze (1) nach einem der Ansprüche 2 bis 6,
**dadurch gekennzeichnet,**
**dass** das Zusatzgewicht (5.1, 5.2) in seiner Lage vorzugsweise durch eine Klemmeinrichtung (7) einstellbar ist.

7. Walze (1) nach Anspruch 1,
**dadurch gekennzeichnet,**
**dass** das erhöhte Gewicht (5.1, 5.2, 13, 14) durch mindestens eine Materialanhäufung (13) bei vergrößerter Wandstärke (D₁₃) des Walzenrohrs (4) hergestellt ist.

8. Walze (1) nach Anspruch 7,
**dadurch gekennzeichnet,**
**dass** die Materialanhäufung (13) während des Herstellungsprozesses erfolgt.

9. Walze (1) nach Anspruch 1,
**dadurch gekennzeichnet,**
**dass** das erhöhte Gewicht (5.1, 5.2, 13, 14) durch die Verwendung mindestens eines Werkstoffs (14) mit größerer Dichte (ρ₁₄) als die Dichte (ρ₄) des Walzenrohrs (4) hergestellt ist.

10. Walze (1) nach Anspruch 9,
**dadurch gekennzeichnet,**
**dass** der Werkstoff (14) mit größerer Dichte (ρ₁₄) vorzugsweise vollständig von dem Material des Walzenrohrs (4) umgeben ist.

11. Walze (1) nach einem der vorhergehenden Ansprüche,
**dadurch gekennzeichnet,**
**dass** das erhöhte Gewicht (5.1, 5.2, 13, 14) im Bereich von 0,5 bis 1,5, vorzugsweise von 0,8 bis 1,2, des Gewichts des Walzenrohrs (4) liegt.

12. Walze (1) nach einem der vorhergehenden Ansprüche,
**dadurch gekennzeichnet,**
**dass** das Walzenrohr (4) aus einem Material hergestellt ist, das eine geringere, insbesondere eine wesentlich geringere, Biegefestigkeit als das für den Walzenträger (4) verwendete Material aufweist.

13. Walze (1) nach einem der vorhergehenden Ansprüche,
**dadurch gekennzeichnet,**
**dass** das Walzenrohr (4) aus einem faserverstärkten Kunststoff besteht, wobei das Walzenrohr (4) bevorzugt einen Wickelaufbau aufweist.

14. Walze (1) nach Anspruch 13,
**dadurch gekennzeichnet,**
**dass** der faserverstärkte Kunststoff ein glasfaserverstärkter Kunststoff (GfK) oder ein kohlefaserverstärkter Kunststoff (CfK) ist.

15. Walze (1) nach einem der vorhergehenden Ansprüche,
**dadurch gekennzeichnet,**
**dass** das Walzenrohr (4) im axial mittleren Bereich (2) mechanisch fest mit dem Walzenträger (3) verbunden ist und der Walzenträger (3) rotierbar in einer Walzenstuhlung (8.1, 8.2) gelagert ist.

16. Walze (1) nach Anspruch 15,
**dadurch gekennzeichnet,**
**dass** die Lagerungen (9.1, 9.2) des Walzenträgers (3) in der Walzenstuhlung (8.1, 8.2) jeweils zumindest ein CARB-Lager umfassen.

17. Walze (1) nach einem der Ansprüche 1 bis 14,
**dadurch gekennzeichnet,**
**dass** das Walzenrohr (4) im axial mittleren Bereich (2) rotierbar auf dem Walzenträger (3) gelagert ist.

18. Walze (1) nach Anspruch 17,
**dadurch gekennzeichnet,**
**dass** die mittige Lagerung (9.1, 9.2) zumindest ein Pendelrollenlager (10.1, 10.2) umfasst.

## Claims

1. Roll (1) comprising a roll tube (4) which is supported, at least in the radial direction, exclusively in an axially central region (2) on a continuous roll support (3) and which, outside this central region (2) is at a distance (A) from the roll support (3) that permits bending of the roll tube (4) relative to the roll support (3), **characterized in that**, in its two lateral end regions (4.1, 4.2), the roll tube (4) is provided with an increased weight (5.1, 5.2, 13, 14) in each case, in order, on account of the increased weight (5.1, 5.2, 13, 14) that acts in each case, thereby to produce a considerable deflection component (K_{D}) under the inherent weight in the respective lateral end region (4.1, 4.2).

2. Roll (1) according to Claim 1, **characterized in that** the increased weight (5.1, 5.2, 13, 14) is at least one single-piece additional weight (5.1, 5.2).

3. Roll (1) according to Claim 2, **characterized in that** the additional weight (5.1, 5.2) has the form of a circular ring (6.1, 6.2) having a substantially constant external diameter (D_{A}), and is fitted at least partly within the lateral end region (4.1, 4.2) of the roll tube (4).

4. Roll (1) according to Claim 2, **characterized in that** the additional weight (5.1, 5.2) has the form of a circular ring (6.1, 6.2) having at least two external diameters (D_{A1}, D_{A2}), and is fitted both within and outside the lateral end region (4.1, 4.2) of the roll tube (4), the largest external diameter (D_{A2}) of the additional weight (5.1, 5.2) not being larger than the external diameter (D_{W}) of the roll tube (4).

5. Roll (1) according to Claim 3 or 4, **characterized in that** the additional weight (5.1, 5.2) formed as a circular ring (6.1, 6.2) has at least two recesses (12.1, 12.2) arranged symmetrically with respect to the ring axis (11).

6. Roll (1) according to one of Claims 2 to 6, **characterized in that** the position of the additional weight (5.1, 5.2) can be adjusted, preferably by means of a clamping device (7).

7. Roll (1) according to Claim 1, **characterized in that** the increased weight (5.1, 5.2, 13, 14) is produced by means of at least one accumulation of material (13) with an increased wall thickness (D₁₃) of the roll tube (4).

8. Roll (1) according to Claim 7, **characterized in that** the accumulation of material (13) is produced during the production process.

9. Roll (1) according to Claim 1, **characterized in that** the increased weight (5.1, 5.2, 13, 14) is produced by using at least one material (14) with a greater density (ρ₁₄) than the density (ρ₄) of the roll tube (4).

10. Roll (1) according to Claim 9, **characterized in that** the material (14) of higher density (ρ₁₄) is preferably completely surrounded by the material of the roll tube (4).

11. Roll (1) according to one of the preceding claims, **characterized in that** the increased weight (5.1, 5.2, 13, 14) lies in the range from 0.5 to 1.5, preferably from 0.8 to 1.2, of the weight of the roll tube (4).

12. Roll (1) according to one of the preceding claims, **characterized in that** the roll tube (4) is produced from a material which has a lower, in particular a substantially lower, bending strength than the material used for the roll support (3).

13. Roll (1) according to one of the preceding claims, **characterized in that** the roll tube (4) consists of a fibre-reinforced plastic, the roll tube (4) preferably having a wound structure.

14. Roll (1) according to Claim 13, **characterized in that** the fibre-reinforced plastic is a glass-fibre reinforced plastic (GRP) or a carbon-fibre reinforced plastic (CRP).

15. Roll (1) according to one of the preceding claims, **characterized in that** the roll tube (4) is mechanically firmly connected to the roll support (3) in the axially central region (2), and the roll support (3) is rotatably mounted in a roll frame (8.1, 8.2).

16. Roll (1) according to Claim 15, **characterized in that** the mountings (9.1, 9.2) of the roll support (3) in the roll frame (8.1, 8.2) in each case comprise at least one CARB bearing.

17. Roll (1) according to one of Claims 1 to 14, **characterized in that** the roll tube (4) is rotatably mounted on the roll support (3) in the axially central region (2).

18. Roll (1) according to Claim 17, **characterized in that** the central mounting (9.1, 9.2) comprises at least one self-aligning roller bearing (10.1, 10.2).

## Revendications

1. Cylindre (1) composé d'une enveloppe de cylindre (4) supportée au moins dans le sens radial exclusivement dans une zone axiale médiane (2) sur un support de cylindre (3) traversant, enveloppe présentant en dehors de cette zone médiane (2) un écart (A) permettant une courbure de l'enveloppe de cylindre (4) par rapport au support de cylindre (3),
**caractérisé en ce**
**que** l'enveloppe de cylindre (4) est pourvue dans chacune de ses deux zones extrêmes latérales (4.1, 4.2) d'une masse augmentée (5.1, 5.2 ; 13, 14) afin de créer en raison de chaque masse augmentée (5.1, 5.2, 13, 14) en action une composante de cintrage (K_{D}) notable sous une masse propre dans chacune des zones extrêmes latérales (4.1, 4.2).

2. Cylindre (1) selon la revendication 1,
**caractérisé en ce**
**que** la masse augmentée (5.1, 5.2, 13, 14) est au moins une masse supplémentaire monobloc (5.1, 5.2).

3. Cylindre (1) selon la revendication 2,
**caractérisé en ce**
**que** la masse supplémentaire (5.1, 5.2) présente la forme d'un anneau circulaire (6.1, 6.2) avec un diamètre extérieur (D_{A}) essentiellement constant et monté au moins en partie à l'intérieur de la zone extrême latérale (4.1, 4.2) de l'enveloppe de cylindre (4).

4. Cylindre (1) selon la revendication 2,
**caractérisé en ce**
**que** la masse supplémentaire (5.1, 5.2) présente la forme d'un anneau circulaire (6.1, 6.2) avec au moins deux diamètres extérieurs (D_{A1}, D_{A2}) et qu'elle est disposée aussi bien à l'intérieur qu'à l'extérieur de la zone extrême latérale (4.1, 4.2) de l'enveloppe de cylindre (4), le diamètre extérieur le plus grand (D_{A2}) de la masse supplémentaire (5.1, 5.2) n'étant pas supérieur au diamètre extérieur (D_{W}) de l'enveloppe de cylindre (4).

5. Cylindre (1) selon la revendication 3 ou 4,
**caractérisé en ce**
**que** la masse supplémentaire (5.1, 5.2) réalisée sous forme d'un anneau circulaire (6.1, 6.2) présente au moins deux évidements (12.1, 12.2) symétriques à l'axe d'anneau (11).

6. Cylindre (1) selon l'une des revendications 2 à 6,
**caractérisé en ce**
**que** la masse supplémentaire (5.1, 5.2) est de préférence réglable en position par un dispositif de serrage (7).

7. Cylindre (1) selon la revendication 1,
**caractérisé en ce**
**que** la masse augmentée (5.1, 5.2, 13, 14) est réalisée par au moins une accumulation de matériau (13) avec une épaisseur de paroi supérieure (D₁₃) de l'enveloppe de cylindre (4).

8. Cylindre (1) selon la revendication 7,
**caractérisé en ce**
**que** l'accumulation de matériau (13) est réalisée pendant le processus de fabrication.

9. Cylindre (1) selon la revendication 1,
**caractérisé en ce**
**que** la masse augmentée (5.1, 5.2, 13, 14) est réalisée par l'utilisation d'au moins un matériau (14) à densité supérieure (ρ₁₄) à la densité (ρ₄) de l'enveloppe de cylindre (4).

10. Cylindre (1) selon la revendication 9,
**caractérisé en ce**
**que** le matériau (14) à densité supérieure (ρ₁₄) est de préférence entièrement entouré par le matériau de l'enveloppe de cylindre (4).

11. Cylindre (1) selon l'une des revendications précédentes,
**caractérisé en ce**
**que** la masse augmentée (5.1, 5.2, 13, 14) se situe dans la plage de 0,5 à 1,5, de préférence de 0,8 à 1,2 de la masse de l'enveloppe de cylindre (4).

12. Cylindre (1) selon l'une des revendications précédentes,
**caractérisé en ce**
**que** l'enveloppe de cylindre (4) est réalisée dans un matériau présentant une résistance à la flexion plus faible, de préférence essentiellement plus faible que le matériau utilisé pour le support de cylindre (3).

13. Cylindre (1) selon l'une des revendications précédentes,
**caractérisé en ce**
**que** l'enveloppe de cylindre (4) est composée d'une matière plastique renforcée en fibres, l'enveloppe de cylindre (4) présentant de préférence une structure enroulée.

14. Cylindre (1) selon la revendication 13,
**caractérisé en ce**
**que** la matière plastique renforcée en fibres est une matière plastique renforcée en fibres de verre (GfK) ou une matière plastique renforcée en fibres de charbon (CfK).

15. Cylindre (1) selon l'une des revendications précédentes,
**caractérisé en ce**
**que** l'enveloppe de cylindre (4) est mécaniquement solidaire du support de cylindre (3) dans la zone axiale médiane (2) et que le support de cylindre (3) est monté en rotation dans une chaise de palier à cylindre (8.1, 8.2).

16. Cylindre (1) selon la revendication 15,
**caractérisé en ce**
**que** les paliers (9.1, 9.2) du support de cylindre (3) comprennent au moins respectivement un palier CARB dans la chaise de palier à cylindre (8.1, 8.2).

17. Cylindre (1) selon l'une des revendications 1 à 14,
**caractérisé en ce**
**que** l'enveloppe de cylindre (4) est montée en rotation sur le support de cylindre (3) dans la zone axiale médiane (2).

18. Cylindre (1) selon la revendication 17,
**caractérisé en ce**
**que** le palier centré (9.1, 9.2) comprend au moins un roulement à rotule (10.1, 10.2).
